Europäisches Patentamt

European Patent Office

Office européen des brevets

(19)

(11) Publication number: **0 017 988**
**B1**

(12) **EUROPEAN PATENT SPECIFICATION**

(45) Date of publication of patent specification: **01.02.84**

(21) Application number: **80102064.5**

(22) Date of filing: **17.04.80**

(51) Int. Cl.³: **G 06 F 15/16,**
**H 04 L 25/38, H 04 Q 3/54**

(54) **Multiplex interface circuit connecting a processor to a synchronous transmission means.**

(30) Priority: **19.04.79 IT 6781979**

(43) Date of publication of application:
**29.10.80 Bulletin 80/22**

(45) Publication of the grant of the patent:
**01.02.84 Bulletin 84/5**

(84) Designated Contracting States:
**DE FR GB NL SE**

(56) References cited:
**DE - A - 2 713 304**
**DE - A - 2 749 226**
**DE - A - 2 751 106**
**DE - A - 2 755 616**
**GB - A - 1 490 872**
**US - A - 4 096 564**
**US - A - 4 099 233**

**ELEKTRONISCHE RECHENANLAGEN, Vol. 11,
No. 3, June 1969, München-Wien LEIPOLD,
SPREEN "Organization of information flow
between the central processing unit and
peripherals in computing systems", pages 151-
161**
**TELCOM REPORT, Vol. 2, No. 2, April 1979,
Published by SIEMENS, München und Berlin; C.
ZELLER "DAK5 - eine Datenaustauscheinheit des
Mikrocomputersystems MES80 zur**

(73) Proprietor: **CSELT Centro Studi e Laboratori
Telecomunicazioni S.p.A.**
**Via Guglielmo Reiss Romoli, 274**
**I-10148 Turin (IT)**

(72) Inventor: **Gandini, Marco**
**C.so Siracusa, 118**
**Torino (IT)**
Inventor: **Viale, Ernesto**
**Via Viberti 4**
**Torino (IT)**

(74) Representative: **Riederer Freiherr von Paar zu
Schönau, Anton**
**Freyung 615 Postfach 2664**
**D-8300 Landshut (DE)**

(56) References cited:
**Rechnerkopplung", pages 106-110**
**Intel Component Data Catalogue 1978, pp. 12-
142 to 12-151**
**Motorola Semiconductor SSDA,MG6852,
MG68A52, MG68B52, 1978, DS9494R1**
**Informationen Fernsprechvermittlungstechnik
5(1969), H1, pp. 48-54, 56-59**
**Jahrbuch des elektrischen Fernmeldewesens,
1967, pp. 9-29**

## Multiplex interface circuit connecting a processor to a synchronous transmission means

The invention relates to a multiplex interface circuit as stated in the prior art portion of claim 1 and thus, e.g. is usable for message interchange among microprocessors connected by a synchronous transmission network.

The need of a system for message interchange among two processors derives from the fact that binary-signal flow transiting over the transmitting means necessarily occurs at a precise rate and in synchronism with the other flows present on the communication network. On the other side, the signals generated by a microprocessor have a rate and a phase proper to the times of the internal operation of the central processing unit. Therefore when a microprocessor wants to send signals having the meaning of data or commands towards other microprocessors or slaved devices, it must adjust the sequence to strictly predetermined time criteria that are proper to the network.

Of course the same problem is encountered when the microprocessor is to extract digital signals inserted into the flow of signals transiting over the synchronous transmitting means. In this case, the operation is to be effected at certain fixed instants and at a certain repetition rate caused by the rate and phase proper to the transmitting means.

Another problem is the interconnection of a plurality of microprocessors, by using a common connection network of the synchronous type. In this case the traffic of messages transiting from and towards the various microprocessors must be controlled so as to avoid possible mutual interferences.

So far the problem of interconnecting a plurality of microprocessors has been solved by using direct point-to-point connections on which the information is transferred serially or in parallel. That entails the existence of a number of connections equal to the product of the number of access points to every microprocessor by the number of present microprocessors. In addition, each connection requires an interface circuit and a program for controlling it. Besides other disadvantages, such as interconnection complexity, these systems require the occupation of considerable memory areas and rather long processing times, that obviously hinder the requirements of a computer that is to operate in real time, as a processor. To facilitate the task of each microprocessor and speed up program times, multiprocessing techniques have recently been used. According to these techniques a number of memories are interconnected by bus.

However, as it is well known to a person skilled in the art, these techniques are very complex, chiefly as to what concerns the control program, and are lacking flexibility.

The invention starts out from a known system ("Jahrbuch des elektrischen Fern- meldewesens" 1967, pages 9 to 29) concerning peripheral data traffic in modern data processing systems. According to this known technique (item III of the publication) the processor may be connected to a bus which itself connects different input/output devices, via a multiplex interface circuit comprising a data line and a control line, the control line scanning different channel registers each of which is allotted to one of the multiplex channels of the data line, each channel being allotted to one of the input/output devices. While in the channel registers the channel control signals including a channel address word are stored, the data to be transmitted are read according to the multiplex system in the main memory of the processor and are buffer memorized in the interface circuit. The channel circuit can work autonomously, by counting and stepping through the different orders according to the sequence they are to be carried out in the respective time slots. However, due to the organization of the interface circuit, applicability thereof is restricted to particular system architectures, so it is e.g. not possible to connect different microprocessors with each other via a PCM (pulse code modulation) transmission network.

The problem is to bring about a very versatile interface circuit which blocks the processor for as short a time as any possible and permits almost arbitrary connections using one or several channels for each transmission. This problem is solved by the invention as characterized in claim 1. Further developments thereof are characterized in the subclaims. The interface circuit of the invention is able to synchronize the emission rate of a message supplied by a microprocessor with that of the synchronous transmission means, and vice versa to synchronize the rate of a message present on the synchronized transmission means with that of the microprocessor that receives the message. The microprocessor states which channels—which memory areas— are to be used for the transmission, and after having completely stored its message into the memory area according to its intrinsic timing requirements, the synchronous reading and transmission starts without the microprocessor being any longer involved; in the opposite direction, the message is completely written according to subsequent time slots of the synchronous transmission means into the respective memory area and is asynchronously read therefrom by the microprocessor.

Advantageously, the memory of the interface circuit is arranged as characterized in claim 2 so that both of the transmission directions do not interfere with each other.

The interface circuit of the invention allows to establish a system which does not block the microprocessor computing times during message assumption or transmission. In addition, the connection of such an interface system to a microprocessor does not present any difficulty as it can be connected and controlled from every point of view as a usual memory unit. Further, the interface circuit is easy to integrate.

One way of carrying out the invention is described in detail below with reference to the annexed drawing which shows a block diagram of the embodiment of the invention.

To make it clearer reference will be made to a transmitting means such as a PCM group (Pulse Code Modulation) at 2 Mbit/s. It is a transmitting means whose use is being extended in the telecommunication field, where it is used for data, information and coded speech signal transmission. As known, a PCM group at 2 Mbit/s consists of 32 PCM channels, each at a 64 Kbit/s rate. Each channel occupies a time slot in the frame of the synchronous PCM transmission scheme.

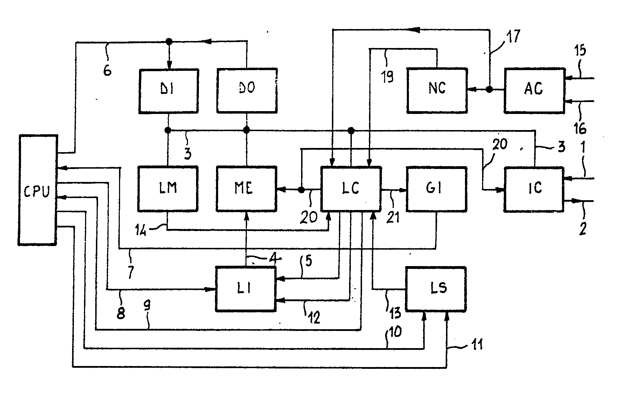

In the drawing references 1 and 2 denote the lines on which the PCM groups at 2 Mbit/s are transferred respectively to and from a system comprising a microprocessor CPM and an interface circuit.

The microprocessor CPU is a central processing unit, composed of a computing unit and a data and program memory, of a kind easily available in integrated form on a single chip. The microprocessor CPU is connected to other blocks through a bus 6 devoted to data and a bus 8 devoted to the addresses intended for addressing memory ME.

The data transmitted on such group appears not only at constant rate, but also presents a well-defined frame and channel synchronism which, as previously mentioned, makes the connection to a basically asynchronous microprocessor a real problem.

A block denoted by IC serves as a decoupling output or input means of the system of the microprocessor and the interface circuit toward or from, respectively, the lines 1, 2. It basically consists of a shift register having as many cells as are bits to be inserted into the PCM channel during the operation of IC as parallel-to-series converter and to be extracted during the operation as series-to-parallel converter.

IC receives timing signals and signals enabling the extraction or the insertion through wire 20 from a logic circuit LC; said signals of course depend on the timing of the PCM channels and on the control requirement proper to the interface circuit. The signals are in series on lines 1 and 2 and in parallel at the parallel output of IC on a bus 3.

ME denotes a usual read and write-memory unit in which the messages to be transmitted via the PCM groups are written and the received messages are read by the microprocessor CPU.

ME is addressed by means of suitable signals present on wire 4, while it supplies and receives the messages through the bus 3 and receives signals enabling to write and read through a connection 20 from the logic circuit LC. ME is ideally subdivided into a plurality of memory areas, each of them is allotted to one of the channels at 64 Kbit/s of PCM group at 2 Mbit/s. In its turn each area is subdivided into a part that could be defined as "receiver", in which the received messages are stored and then read, and into another part that could be defined as "transmitter", in which the messages to be sent to the transmission means, e.g. for other microprocessors, are written and then transmitted.

Said single parts store also state words each allotted to one of the messages and summarizing the situation relevant to the way of operation, to the enabling or disabling, to the word number within the message that is being transmitted or received, etc.

The logic circuit LC controls message reception and transmission by utilizing to this aim the state word present in the respective part of each area of the memory ME. It effects reading and writing operations in ME during the time phases the addresses are selected according to the synchronous system, i.e. during the times of transmitting to or receiving from the lines 1, 2, by sending the suitable address words on connection 5, via a multiplexer LI and the connection 4 to the addressing input of ME. More particularly, LC effects a direct cycle for the reading in the memory area allotted to the present PCM channel, of the state word, and an indirect cycle for the reading or writing of the respective message word, and finally effects a new direct writing cycle to modify the state word according to the information received or transmitted in the message. As known, direct cycle means the usual access cycle to a memory, that is the cycle in which wanted data correspond to the addressed cells, while indirect cycle means the one in which the addressed cells correspond to a new address that identifies the memory cells in which wanted data are present.

The multiplexer LI switches on connection 4 the address words coming from CPU on bus 8 or from logic circuit LC on connection 5. It may consist of a usual multiplexer and is controlled by LC, through signals sent on connection 12.

There is a connection 9 on which a signal able to synchronize data acquisition by CPU is sent from the logic circuit LC, this signal stating to CPU the writing and reading phases of the memory ME.

Reference LS denotes a logic circuit that reports the organization of the operations of CPU towards other blocks of the system. Said logic circuit LS receives on wires 10 and 11 the information requesting reading-and-writing operations from CPU. By means of said information LS processes and transfers a request information on a wire 13 to the logic circuit LC which—depending on the present synchronous phase—allows or does not allow reading or writing. Thereby, contemporary access conflicts to memory ME among CPU and the logic control circuit LC are avoided. As stated, LC solves the conflict by determining suitable time phases for reading and writing, while if necessary making CPU wait.

On the ground of said information, as mentioned, LC sends commands for the correct multiplexer positioning to LI and chooses time instants and periods for message transfer to and from memory ME so as to synchronize the message transmission and reception with the PCM channel phase.

Reference LM denotes a logic circuit able to recognize a word of "message start" at the beginning of messages coming from or being transmitted to the lines 1, 2. The word of "message start" is a usual binary sequence having a suitable configuration easy to recognize among other message words. As soon as on bus 3 the presence of said word is recognized, LM sends a signal via connection 14 to LC with the task of modifying one bit of the state word of the involved receiver area in the memory ME.

Reference G1 denotes a logic circuit that sends to CPU an acknowledgement signal of completed message transfer to the receiver or from the transmitter. The acknowledgement signal is sent to CPU through connection 7.

References DI and DO denote two decoupling circuits each consisting of a register apt respectively to store the data coming from CPU according to its reading rules and to supply the data requested by CPU according to its writing rules. The data access CPU via bus 6 and memory ME via bus 3.

Timing signals at 2 Mbit/s as well as synchronism signals at 125 $\mu$s extracted in a conventional way from the 2 Mbit/s PCM groups arrive at the block denoted AC through wires 15 and 16. Said signals are duly processed by AC, that consists of a chain of frequency dividers, so that it can form signals utilized to enable the channel cycles by logic circuit LC, at which they arrive through connection 17. In addition there is a logic circuit NC in series with AC and connected to it by connection 17, with structure similar to AC, able to generate suitable signals for the scanning of the memory areas according to the channel times within the PCM frame. Also these signals, present on connection 19, are sent to the logic circuit LC.

The system operation will now be examined both when a message consisting of a plurality of words is to be transmitted by one microprocessor to another one, and when it is to be received.

In the first case, CPU first makes a request for writing in memory unit ME by sending on the respective one of wires 10 or 11 the enabling and writing request signal towards logic circuits LS, on connection 8 the addresses relating to the cells of ME into which it is to be written and on bus 6 the message words.

Circuit LS transfers through wire 13 the request to circuit LC, that presets in turn multiplexer LI to transfer at the suitable instants according to the writing phases to ME the addresses coming from CPU, by sending a suitable command signal on wire 12. The data forming the message word pass from register DI, having solely decoupling function among buses, to bus 3 and therefrom to memory ME.

At this point the usual operations of the processing unit CPU can begin again. They had been interrupted just for the time necessary to the transfer which had been enabled upon command of logic circuit LC, such command depending on the writing phases. To this aim LC had sent to CPU through wire 9 a "message issue signal" that once the transfer is complete is removed so as to allow CPU to begin again processing operations. Alternatively, also, a control by a "wait issuing signal" supplied to CPU in the memory reading phases would be possible.

The other words are transferred and memorized in the same way until the asynchronous message transmission from CPU into ME is completed. The state word associated to the message is transferred and written in an analogous way. Said state word is read by the logic circuit LC, that can in this way identify the position in the memory zone, where the words of the message are stored, and can decide their transmission. The transmission is carried out in the timeslot of the PCM channel allotted to said memory zone, by sending word after word in said time slot in subsequent frames. The logic circuit LC uses during the transmission the four least significant bits of the state word as indirect memory address for the respective word and one bit for starting the transmission. In addition it extracts the first word to be transmitted and increments the address so as to access the subsequent word, that it will afterwards transmit in the subsequent frame. During transmission of the last word of the message, LC partially modifies the state word so that it may mean "transmission end" and if it is enabled by the same state word, it controls through wire 21 circuit GI. Said circuit GI confirms the occurred transmission on wire 7 to CPU.

If the microprocessor is to receive a message from another microprocessor, the operations are the following: LC scans the memory areas of the receiver part of the memory according to the sequence of the PCM channels. A message incoming from lines 1, 2 begins with the word of "message start" which is sent to the logic circuit LC through wire 14, as soon as circuit LM recognizes it. LC commands ME to store the first word of the arriving message, at the address denoted by the channel number and part of the state word. Autonomously LC increases the word address in the state word and sends the updated state word to ME, the increased address being necessary to store the next word of the message. At this point, again, circuit LC modifies the state word by increasing the bits concerning the word number, and in case the last message word has been received and LC is enabled, it informs unit CPU of the occurred reception, whereupon CPU according to this intrinsic timing sends its request for reading in the respective area.

In case of a frame PCM, in which the channels come one after the other at different times, the described connection system can operate for any number of channels, provided the capacity of the memory ME is dimensioned to the purpose.

**Claims**

1. Multiplex interface circuit connecting for message exchange a processor (CPU) to a synchronous transmission means (1, 2) wherein messages to be transmitted are organized in time slots which are regularly arranged in frames and which are each allotted to one of several transmission channels, the interface circuit containing circuits (AC, NC) extracting synchronous timing signals from the transmission means, and making use of a read-and-write memory (ME) and of a first logic circuit (LC) controlling the interface circuit and the memory, thereby establishing writing and reading phases, said memory being addressable by the first logic circuit (LC), memory locations being provided for state words each containing bits signifying allowance to start writing or reading, bits signifying the word location address within the memory and bits signifying the end of writing or reading, and locations for each message word, the state words being cyclically scannable by the first logic circuit (LC) and the word location address thereof being stepped through the possible word location addresses by the first logic circuit (LC) during reading and writing, characterized in that the interface circuit contains the read-and-write memory (ME) which is subdivided into memory areas each allotted to one of the transmission channels, each memory area being addressable according to the instantaneous transmission channel upon generation of the channel numbers by the circuits (AC, NC) which extract the synchronous timing signals, the message input/output of which memory is to be connected via decoupling means (DI, DO, IC) to the message output/input (6) of the processor which is a microprocessor and to the transmission means (1, 2), the address input of the memory (ME) being connected to a multiplexer (LI) switching over between the first logic circuit (LC) and a terminal (8) to be coupled to the microprocessor; and that the first logic circuit (LC) has a control input (10, 11, 13) connectable to the microprocessor (CPU) for taking over writing and reading requests therefrom which it allows taking into account said writing and reading phases, and an output (7, 21) for issuing an end of writing and reading signal to the microprocessor (CPU) when a complete message has been received from or transmitted to one of the transmission channels.

2. Interface circuit according to claim 1, characterized in that each memory area is subdivided into two parts, one of them serving for storing the messages generated by the microprocessor (CPU) for then transmitting them and the other one serving for storing the messages received from the transmission means (1, 2) for then passing them on to the microprocessor, each part containing a location for the state word and a location for each of the respective message words.

3. Interface circuit according to claims 1 or 2, characterized in that for connection to the transmission means (1, 2), the decoupling circuit (IC) is a shift register able to perform as parallel-to-series or series-to-parallel converter, to insert onto the transmission means (1, 2) or extract from it message words having parallel form on the bus (3) and having series form on the transmission means (1, 2) and enabled and timed by said first logic circuit (LC);

— the circuits (AC, NC) extracting synchronous timing signals being extracting logic circuits, one of them (AC) being able to process timing and synchronous signals proper to the transmitting means (1, 2) to obtain a signal relevant to the reception and transmission times of said messages, that is to be supplied to said first logic circuit (LC), and the other one (NC) of them being able to process signals coming from the first named one (AC) of these extracting logic circuits (AC, NC) to obtain a signal relevant to times of transmission and reception of the words forming the messages, that is to be supplied to the logic circuit (LC);
— said read-and-write memory (ME), wherein messages to be transmitted are written and the received messages are read, that has the inputs and outputs relating to the data connected to said bus (3), and the inputs relating to the addresses connected to the multiplexers (LI) being also enabled to read or to write by said first logic circuit (LC);
— said multiplexer (LI), able to switch on a wire (4) connected to the output the signals present on one (5) or the other input (8), on the basis of commands present at a third output (12) and coming from said first logic circuit (LC);
— a second logic circuit (LS), able to emit a signal at its output (13) on the basis of the presence at its inputs (10, 11) of signals enabling either to read from or to write into said memory (ME), said signals being supplied by said microprocessor (CPU);

— a third logic circuit (LM), able to recognize a binary word with a suitable configuration, that appears at its input connected to said bus (3), and able to communicate the occurred identification at said first logic circuit (LC);

— a fourth logic circuit (GI), able to identify a suitable signal emitted by said first logic circuit (LC) and to communicate its presence to said microprocessor (CPU);

— the decoupling means comprising a first register (DI), able to store and transfer the data coming from said microprocessor (CPU) to said bus (3);

— said first logic circuit (LC), to which have access said second logic circuit (LS), said third logic circuit (LM), said extracting logic circuits (AC, NC), and said bus (3), through which it can read the contents of said memory unit (ME), and from which signals outgo intended for said multiplexer (LI), for said fourth circuit (GI), for said memory (ME), for said shift register (IC) and for said microprocessor, said first logic circuit being able to effect a first direct cycle for the reading of a state word relevant to each message, and to effect an indirect cycle for the reading or the writing of the message and finally to effect a new direct reading cycle for the modification of said state word in said memory (ME).

**Patentansprüche**

1. Multiplexe Anpassungsschaltung zur Verbindung eines Prozessors (CPU) mit synchronen Übertragunsmitteln (1, 2) zum Nachrichtenaustausch, bei denen zu übertragende Nachrichten in regelmäßig in Rahmen angeordneten Zeitlagen organisiert sind und jeweils einem von mehreren Übertragungskanälen zugeordnet sind, wobei die Anpassungsschaltung Schaltungen (AC, NC) zum Extrahieren synchroner Zeitsteuersignale von den Übertragungsmitteln enthält und sich eines Schreib/Lesespeichers (ME) und einer ersten logischen Schaltung (LC) bedient, die die Anpassungsschaltung und den Speicher steuert, wodurch Schreib- und Lesephasen festgelegt sind, und wobei der Speicher durch die erste logische Schaltung (LC) adressierbar ist und Speicherpositionen für Zustandswörter, von denen jedes die Freigabe des Schreib- oder Lesestarts signalisierende Bits, die Wortstellungsadresse innerhalb des Speichers signalisierende Bits und das Ende des Schreiben oder Lesen signalisierende Bits enthält, und Speicherpositionen für jedes Nachrichtenwort vorhanden sind und die Zustandswörter durch die erste logische Schaltung (LC) zyklisch abtastbar sind, während ihre Wortstellungsadresse während des Lesens und Schreibens von der ersten logischen Schaltung (LC) durch die möglichen Wortstellungsadressen fortschreitet, dadurch gekennzeichnet, daß die Anpassungsschaltung den Schreib/Lesespeicher (ME) enthält, der in Speicherbereiche unterteilt ist, von denen jeder einem der Übertragungskanäle zugeordnet ist und von denen jeder entsprechend dem momentanen Übertragungskanal aufgrund der Erzeugung der Kanalnummern durch die Schaltungen (AC, NC) welche die synchronen Zeitsteuersignale extrahieren, adressierbar ist, - der Nachrichten-Eingang/Ausgang des Speichers über Entkopplungseinrichtungen (DI, DO, IC) mit dem Nachrichten-Ausgang/Eingang (6) des Prozessors, der ein Mikroprozessor ist, und mit den Übertragungsmitteln (1, 2) zu verbinden ist, — und der Adresseneingang des Speichers (ME) mit einem Multiplexer (LI) verbunden ist, der zwischen die erste logische Schaltung (LC) und einen mit dem Mikroprozessor zu koppelnden Anschluß (8) eingesetzt ist; und daß die erste logische Schaltung (LC) einen mit dem Mikroprozessor (CPU) verbindbaren Steuereingang (10, 11, 13) zum Übernehmen von Schreib-und Leseanforderungen vom Mikroprozessor, der ihm die Berücksichtigung der Schreib- und Lesephasen ermöglicht, und einen Ausgang (7, 21) zum Abgeben eines das Ende des Schreibens und Lesens anzeigenden Signals an den Mikroprozessor (CPU), wenn eine vollständige Nachright von einem der Übertragungskanäle empfangen worden ist oder an ihn gesendet worden ist, aufweist.

2. Anpassungsschaltung nach Anspruch 1, dadurch gekennzeichnet, daß jeder Speicherbereich in zwei Teile unterteilt ist, von denen einer dazu dient, die vom Mikroprozessor (CPU) erzeugten Nachrichten zu speichern, um sie dann zu senden, und der andere dazu dient, die von den Übertragungsmitteln (1, 2) empfangenen Nachrichten zu speichern, um sie dann an den Mikroprozessor weiterzugeben, und daß jeder Teil eine Position für das Zustandswort und eine Position für jedes der jeweiligen Nachrightenwörter aufweist.

3. Anpassungsschaltung nach Anspruch 1 oder 2, dadurch gekennzeichnet, daß

— für die Verbindung zu den Übertragungsmitteln (1, 2) die Entkopplungseinrichtung (IC) ein Schieberegister ist, das als Parallel/Serien-Umsetzer oder als Serien/Parallel-Umsetzer betriebbar ist, zum Einfügen auf die Übertragungsmittel (1, 2) oder zum Extrahieren von den Übertragungsmitteln von Wörten parallelen Aufbaus auf der Sammelleitung (3) und seriellen Aufbaus auf den Übertragungsmitteln (1, 2), und das durch die erste logische Schaltung (LC) angesteuert und zeitgesteuert ist;

— die die synchronen Zeitsteuersignale extrahierenden Schaltungen (AC, NC) extrahierende logische Schaltungen sind, von denen eine (AC) den Übertragungsmitteln (1, 2) eigene Zeitsteuer- und Synchronsignale verarbeitet, um ein die Empfangs- und Sendezeiten der Nachrichten betreffendes Signal zu erhalten, das der ersten logischen Schaltung (LC) einzuspeisen ist, und von denen die andere (NC) die Signale verarbeitet, die von der erstgenannten (AC) dieser extrahierenden logischen Schaltungen (AC, NC) kommen, um ein auf die Sende- und Empfangszeiten der die Nachricht bildenden Wörter bezogenes Signal zu ergeben, das an die logische Schaltung (LC) gegeben wird;

— im Schreib/Lesespeicher (ME) zu sendende Nachrichten geschrieben und empfangene Nachrichten gelesen werden und seine Dateneingänge und -ausgänge mit der Sammelleitung (3) und seine Adresseneingänge mit den Multiplexern (LI) verbunden sind, und der Schreib/Lesespeicher durch die erste logische Schaltung (LC) zum Lesen oder Schreiben angesteuert ist;

— der Multiplexer (LI) das an seinem einen Eingang (5) oder an seinem anderen Eingang (8) liegende Signal zu einem mit dem Ausgang verbundenen Leiter (4) auf der Basis von Befehlen, die an einem dritten Ausgang (12) der ersten Logikschaltung (LC) liegen und von dieser kommen, umschaltet;

— eine zweite logische Schaltung (LS) an ihrem Ausgang (13) einen signal in Abhängigkeit davon abgibt, ob an ihren Eingängen (10, 11) Signale anliegen, die entweder zum Lesen aus dem Speicher (ME) oder zum Schreiben in den Speicher ansteuern und vom Mikroprozessor (CPU geliefert werden;

— eine dritte logische Schaltung (LM) ein binäres Wort geeigneter Konfiguration erkennt, das an ihrem mit der Sammelleitung (3) verbundenen Eingang erscheint, und die durchgeführte Identifizierung an die erste logische Schaltung (LC) meldet;

— eine vierte logische Schaltung (GI) ein von der ersten logischen Schaltung (LC) abgegebenes geeignetes Signal identifiziert und dessen Vorhandensein an den Mikroprozessor (CPU) meldet;

— die Entkopplungseinrichtungen ein erstes Register (DI) umfassen, das die vom Mikroprozessor (CPU) kommenden Daten speichert und sie zur Sammelleitung (3) weitergibt;

— zur ersten logischen Schaltung (LC) die zweite logische Schaltung (LS), die dritte logische Schaltung (LM), die extrahierenden logischen Schaltungen (AC, NC) und die Sammelleitung (3), über die sie den Inhalt des Speichers (ME) lesen kann, Zugriff hat und von ihr für den Multiplexer (LI), für die vierte logische Schaltung (GI), für den Speicher (ME), für das Schieberegister (IC) und für den Mikroprozessor bestimmte Signale ausgehen, und daß die erste logische Schaltung einen ersten direkten Zyklus des Lesens des zu jeder Nachricht gehörenden Zustandsworts, einen indirekten Zyklus des Lesens oder Schreibens der Nachricht und schließlich einen erneuten direkten Zyklus des Lesens für die Modifikation des Zustandsworts im Speicher (ME) bewirkt.

## Revendications

1. Circuit d'interface multiplex connectant un processeur (CPU) à un moyen de transmission synchrone (1, 2) pour l'échange des messages, où les messages à transmettre sont organisés en intervalles de temps groupés avec ordre en trames et dont chacun est destiné à l'un entre plusieurs canaux de transmission, le circuit d'interface comprenant des circuits (AC, NC) pour extraire des signaux de temporisation et synchronisation du moyen de transmission et employant une mémoire à accès direct (ME) aussi bien qu'un premier circuit logic (LC) pour contrôler le circuit d'interface et la mémoire, déterminant ainsi les phases de lecture et d'écriture ladite mémoire pouvant être adressée par le premier circuit logique (LC), des positions mémoire étant prévues pour des mots d'état dont chacun comprend des bits de validation au commencement de la lecture ou de l'écriture, des bits d'adresse de la position mémoire du mot aussi bien que des bits de fin de l'écriture ou de la lecture, et des positions mémoire pour chaque mot de message, les mots d'état pouvant être cycliquement explorés par le premier circuit logique (LC), ce premier circuit logique (LC) faisant prendre à l'adresse de la position mémoire du mot toutes les valeurs possibles des adresses des positions mémoire des mots pendant les opérations d'écriture et de lecture, caractérisé en ce que le circuit d'interface comprend la mémoire à accès direct (ME) qui se subdivise en zones de mémoire dont chacune est assignée à un des canaux de transmission, chaque zone de mémoires pouvant être adressée conformément au canal de transmission actuel d'après la génération des numéros de canal par les circuits (AC, NC) qui prélèvent les signaux de temporisation et synchronisation, l'entrée/sortie pour les messages de ladite mémoire dudit être connectée à l'aide de moyens de découplage (DI, DO, IC) à l'entrée/sortie pour les messages (6) du processeur qui est un microprocesseur et au moyen de transmission (1, 2), l'entrée des adresses de la mémoire (ME) étant connectée à un multiplexeur (LI) pour être aiguillée vers le premier circuit logique (LC) ou vers unterminal (8) qui doit être couplé au microprocesseur; et en ce que le premier circuit logique (LC) à une entrée de commande (10, 11, 15) qui peut être connectée au microprocesseur (CPU) pour recevoir les demandes d'écriture et lecture, ce qu'il permet en tenant compte desdites phases de lecture et écriture, et une sortie (7, 21) pour envoyer un signal de fin d'écriture et lecture au microprocesseur (CPU) lorsque un message complet a été reçu d'un des canaux de transmission ou transmis au même.

2. Circuit d'interface selon la revendication 1, caractérisé en ce que chaque zone de mémoire est subdivisée en deux parties, l'une apte à mémoriser les messages engendrés par le microprocesseur (CPU) pour les transmettre après et l'autre à mémoriser les messages reçus du moyen de transmission (1, 2) pour les envoyer après au microprocesseur, chaque partie comprenant une position pour le mot d'état et une position pour chacun des mots de message respectifs.

3. Circuit d'interface suivant les revendications 1 ou 2, caractérisé en ce que pour se connecter au moyen de transmission (1, 2), ce circuit de découplage (IC) est un registre de déplacement capable d'opérer comme un convertisseur parallèle-série ou sécie-parallèle pour insérer sur ce moyen de transmission (1, 2) ou extraire du même des mots de message ayant une forme parallèle sur un bus (3) et une forme série sur le moyen de transmission (1, 2) étant en outre validé et temporisé par ce premier circuit logique (LC);

— les circuits (AC, NC) qui prélèvent des signaux de synchronisme et de temporisation étant des circuits logiques de prévèvement, l'un d'eux (AC) étant apte à traiter les signaux de temporisation et synchronisme de ce moyen de transmission (1, 2) pour en extraire un signal, corrélatif aux temps de réception et transmission desdits messages, à transférer à ce premier circuit logique (LC), et l'autre d'eux (NC) étant apte à traiter les signaux provenant du premier (AC) desdits circuits logiques de prélévement (AC, AN) pour en extraire un signal correlatif aux temps de réception et transmission des mots constituant lesdits messages, à envoyer à ce premier circuit logique (LC);

— ce dispositif de mémoire à accès direct (ME), où l'on écrit les messages à transmettre et lit les messages reçus, ayant les entrées et les sorties relatives aux données connectées à ce bus (3) et le entrées relatives aux adresses connectées au multiplexeur (LI), étant aussi validé à la lecture ou à l'écriture par ce premier circuit logique (LC);

— ce multiplexeur (LI), apte à transférer sur un conducteur (4) connecté à la sortie les signaux présents à l'une (5) ou à l'autre (8) entrée, en fonction des commandes présentes à une troisième entrée (12) et provenant dudit premier circuit logique (LC);

— un deuxième circuit logique (LS), apte à émettre un signal à sa sortie (13) d'après la présence à ses entrées (10, 11) des signaux de validation aux opérations d'écriture ou de lecture dans ce dispositif de mémoire (ME), ces signaux étant engendrés par ce microprocesseur (CPU);

— un troisième circuit logique (LM), apte à reconnaître un mot binaire ayant une configuration particulière, lorsq'il se présente à son entrée connectée audit bus (3), et apte à communiquer qu'il y a eu une reconnaissance audit premier circuit logique (LC);

— un quatrième circuit logique (GI), capable de reconnaître un signal particulier émis par ce premier circuit logique (LC) et de communiquer sa présence audit microprocesseur (CPU);

— ces moyens de découplage comprenant un premier registre (DI), apte à mémoriser les données provenant de ce microprocesseur (CPU) et à les transférer à ce bus (3);

— ce premier circuit logique (LC), auquel accèdent ce deuxième circuit logique (LS), ce troisième circuit logique (LM), ces circuits logiques de prélèvement (AC, NC) et ce bus (3) au moyen duquel il peut lire le contenu de ce dispositif de mémoire (ME), et duquel des signaux sont émis pour de multiplexeur (LI), pour ce quatrième circuit logique (GI), pour ce dispositif de mémoire (ME), pour ce registre de déplacements (IC) et pour ce microprocesseur, ce premier circuit logique étant apte à effectuer un premier cycle direct de lecture d'un mot d'état associé à chaque message, à effectuer un cycle indirect de lecture ou écriture du message et enfin à effectuer un nouveau cycle direct d'écriture pour la modification de ce mot d'état en ce dispositif de mémoire (ME).